# EUROPÄISCHE PATENTSCHRIFT

(11) **EP 1 213 531 B1**
(45) Veröffentlichungstag und Bekanntmachung des Hinweises auf die Patenterteilung: **18.05.2011**
(21) Anmeldenummer: 01128678.8
(22) Anmeldetag: 01.12.2001
(51) Int. Cl.: F21S 8/10, B60Q 1/26

(54) **Leuchte für Fahrzeuge**
Vehicle lamp
Feu pour véhicule

(30) Priorität: 06.12.2000 DE 10060489
(43) Veröffentlichungstag der Anmeldung: 12.06.2002
(73) Patentinhaber: Hella KGaA Hueck & Co., 59552 Lippstadt (DE)
(72) Erfinder: Mügge, Martin, 59590 Geseke (DE); Rogge, Ingo, 59558 Lippstadt (DE)
(74) Vertreter: Ostermann, Thomas

(56) Entgegenhaltungen:
- EP-A- 0 942 225
- EP-A- 1 039 215
- DE-A- 19 748 522
- FR-A- 2 447 834
- FR-A- 2 763 385
- US-A- 4 680 678
- PATENT ABSTRACTS OF JAPAN vol. 1995, no. 05, 30. Juni 1995 (1995-06-30) & JP 07 045102 A (STANLEY ELECTRIC CO LTD), 14. Februar 1995 (1995-02-14)

## Beschreibung

Die Erfindung betrifft eine Leuchte für Fahrzeuge nach dem Oberbegriff des Patentanspruchs 1.

Aus der DE 195 14 424 A1 ist eine Leuchte für Fahrzeuge mit einem Gehäuse bekannt, in das zum einen eine erste Lichtquelle und zum anderen eine in Lichtabstrahlung versetzt angeordnete zweite Lichtquelleneinrichtung einsetzbar ist. Die so gebildete Beleuchtungskammer ermöglicht somit die Aufnahme von zwei unterschiedlich aufgebauten Lichtquelleneinrichtungen. Jedoch kann aufgrund des Aufbaus der bekannten Leuchte nur entweder die erste Lichtquelleneinrichtung oder die zweite Lichtquelleneinrichtung in Betrieb genommen werden.

Aus der DE 199 16 845 A1 ist eine Leuchte für Fahrzeuge mit einer ersten Lichtquelleneinrichtung und einer zweiten Lichtquelleneinrichtung bekannt, wobei die zweite Lichtquelleneinrichtung der ersten Lichtquelleneinrichtung vorgelagert ist. Die erste und zweite Lichtquelleneinrichtung sind durch eine gemeinsame Lichtscheibe abgedeckt, wobei der ersten Lichtquelleneinrichtung ein erster Abschnitt und der zweiten Lichtquelleneinrichtung ein zweiter Abschnitt der Lichtscheibe zugeordnet ist. Nachteilig an der bekannten Leuchte ist, das zur Erzeugung von Lichtfunktionen unterschiedlicher Farbe entweder die Lichtscheibe Bereiche unterschiedlicher Farbgebung aufweisen muss oder zusätzlich eine Lichtscheibe bzw. ein Farbfilter vorgesehen sein muss, um in Kombination mit der anderen Lichtscheibe den gewünschten Farbeffekt zu ermöglichen.

Aus der gattungsbildenden US 4 680 678 ist eine Leuchte für Fahrzeuge bekannt, die zum einen eine erste Lichtquelleneinrichtung und zum anderen eine der ersten Lichtquelleneinrichtung vorgelagerte zweite Lichtquelleneinrichtung aufweist. Die beiden Lichtquelleneinrichtungen sind durch eine gemeinsame transparente Abdeckscheibe abgedeckt. Zwischen der ersten Lichtquelleneinrichtung und der zweiten Lichtquelleneinrichtung ist eine Lichtscheibe angeordnet, die eine die Lichtfunktion der ersten Lichtquelleneinrichtung prägende Farbgebung aufweist. Nachteilig an der bekannten Leuchte ist, dass Leuchtelemente der zweiten Lichtquelleneinrichtung von außen durch die transparente Abdeckscheibe einsehbar sind, so dass die Leuchte kein homogenes Erscheinungsbild aufweist.

Aufgabe der vorliegenden Erfindung ist es daher, eine Leuchte für Fahrzeuge mit zwei in einem Gehäuse integrierten Lichtquelleneinrichtungen derart weiterzubilden, dass mit geringem Aufwand eine kompakte und platzsparende Leuchte gewährleistet ist, die zwei Lichtfunktionen unterschiedlicher Signalfarbe und ein homogenes Erscheinungsbild ermöglicht.

Zur Lösung dieser Aufgabe weist die Erfindung die Merkmale des Patentanspruchs 1 auf.

Der besondere Vorteil der Erfindung besteht darin, dass mit geringem Herstellungsaufwand eine platzsparende Anordnung von zwei Lichtquelleneinrichtungen mit Lichtfunktionen unterschiedlicher Farbe ermöglicht wird. Grundgedanke der Erfindung ist es, zur Bildung verschiedener Lichtfunktionen zwei Lichtquelleneinrichtungen vorzusehen, die einen unterschiedlichen Typ von Lichtquellen aufweisen. Dadurch, dass die zweite Lichtquelleneinrichtung über Leuchtelemente verfügt, die im Vergleich zu der Lichtquelle der ersten Lichtquelleneinrichtung Licht in einer unterschiedlichen Farbe erzeugt, kann zur Bildung von Lichtfunktionen unterschiedlicher Farbgebung der Herstellungs- und Materialaufwand durch Vorsehen lediglich einer Lichtscheibe mit einer einzigen vorgegebenen Farbgebung reduziert werden. Vorteilhaft wird durch das Vorsehen von mehreren Leuchtelementen eine Redundanz erzeugt, so dass die zweite Lichtquelleneinrichtung auch bei Ausfall eines oder mehrerer Leuchtelemente den Anforderungen der vorgegebenen Lichtfunktion erfüllen kann. Nach der Erfindung sind die Leuchtelemente der zweiten Lichtquelleneinrichtung auf dem Trägerelement gleichmäßig verteilt angeordnet, wobei jedem Leuchtelement ein Reflektor zugeordnet ist. Auf diese Weise kann zum einen ein von den jeweiligen Leuchtelementen emittiertes divergierendes Strahlenbündel in Abstrahlrichtung der Leuchte geführt werden und zum anderen eine homogene Lichtverteilung der zweiten Lichtquelleneinrichtung gewährleistet werden.

Nach einer Weiterbildung der Erfindung weist die Lichtscheibe eine solche Farbgebung auf, die ausschließlich die durch die erste Lichtquelleneinrichtung emittierten Lichtstrahlen farblich prägt. Die von der zweiten Lichtquelleneinrichtung emittierten Lichtstrahlen bleiben weitgehend unbeeinflusst von der Farbgebung der Lichtscheibe. Vorteilhaft kann hier trotz homogener und einheitlicher Ausbildung der Lichtscheibe den jeweiligen Lichtquelleneinrichtungen zugeordneten Lichtfunktionen eine unterschiedliche Farbgebung zugewiesen werden.

Nach einer Weiterbildung der Erfindung ist den Leuchtelementen der zweiten Lichtquelleneinrichtung, ein Vielreflektorenteil zugeordnet, das aus einer Mehrzahl von gleichartigen Miniaturreflektoren besteht, die jeweils Durchlässe zur Anlage an den Leuchtelementen aufweisen. Vorteilhaft kann durch das einstückige Vielreflektorenteil eine vorgegebene und homogene Lichtverteilung der zweiten Lichtquelleneinrichtung verwirklicht werden.

Nach einer Weiterbildung der Erfindung sind die Leuchtelemente der zweiten Lichtquelleneinrichtung als Leuchtdioden ausgebildet, die ein Lichtbündel roter oder weißer Farbgebung emittierten, In Verbindung mit einer glasklar oder gelb eingefärbten Lichtscheibe wird eine Kombination verschiedener Lichtfunktionen, beispielsweise Rückfahrlicht mit Bremslicht, Rückfahrlicht mit Blinklicht, Blinklicht mit Schlusslicht, Blinklicht mit Bremslicht erzeugt. Vorteilhaft weisen die Leuchtdioden eine geringe Leistungsaufnahme und eine lange Lebensdauer auf.

Ein Ausführungsbeispiel der Erfindung wird nachfolgend in den Zeichnungen näher erläutert.

Es zeigen:
- Figur 1: eine Vorderansicht einer Leuchte,

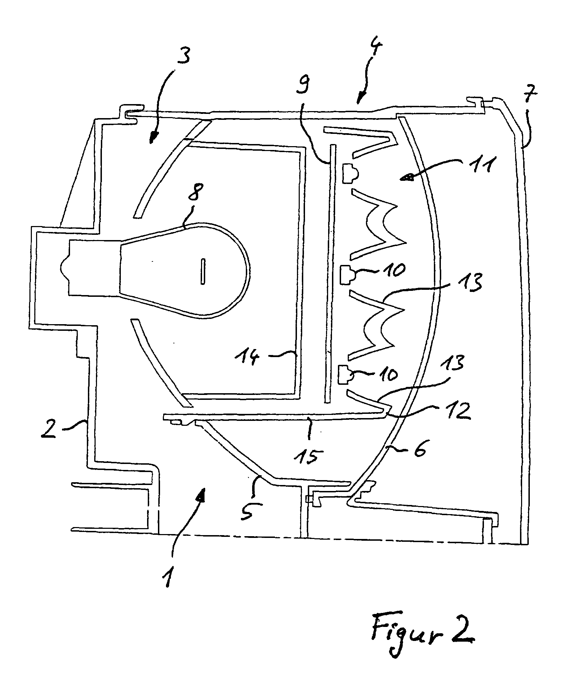

- Figur 2: einen Vertikalschnitt durch die Leuchte gemäß Linie II-II in Figur 1 und

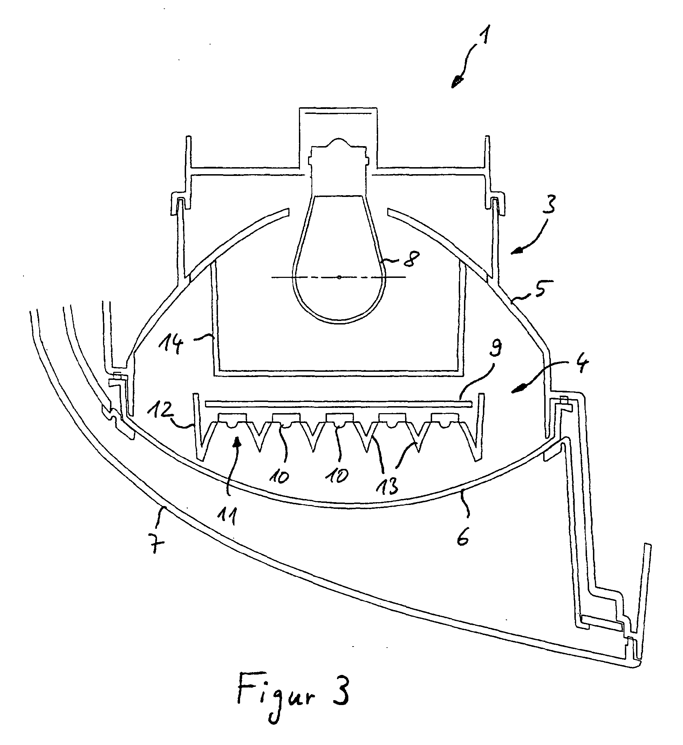

- Figur 3: einen Horizontalschnitt durch die Leuchte gemäß Linie III-III in Figur 1.

Eine Leuchte 1 für Kraftfahrzeuge besteht im Wesentlichen aus einem Gehäuse 2, einer ersten Lichtquelleneinrichtung 3, einer der ersten Lichtquelleneinrichtung vorgelagerten zweiten Lichtquelleneinrichtung 4, einem der ersten Lichtquelleneinrichtung 3 zugeordneten Reflektor 5 sowie einer die Öffnung des Reflektors 5 abdeckenden Lichtscheibe 6.

Der Lichtscheibe 6 ist eine glasklare Abdeckscheibe 7 vorgelagert, die die Öffnung des Gehäuses 2 vollständig abdeckt.

Der Reflektor 5 weist eine zentrale Öffnung auf, in der eine Lichtquelle 8 der ersten Lichtquelleneinrichtung 3 angeordnet ist. Die Lichtquelle 8 kann als Glühlampe oder als Gasentladungslampe ausgebildet sein.

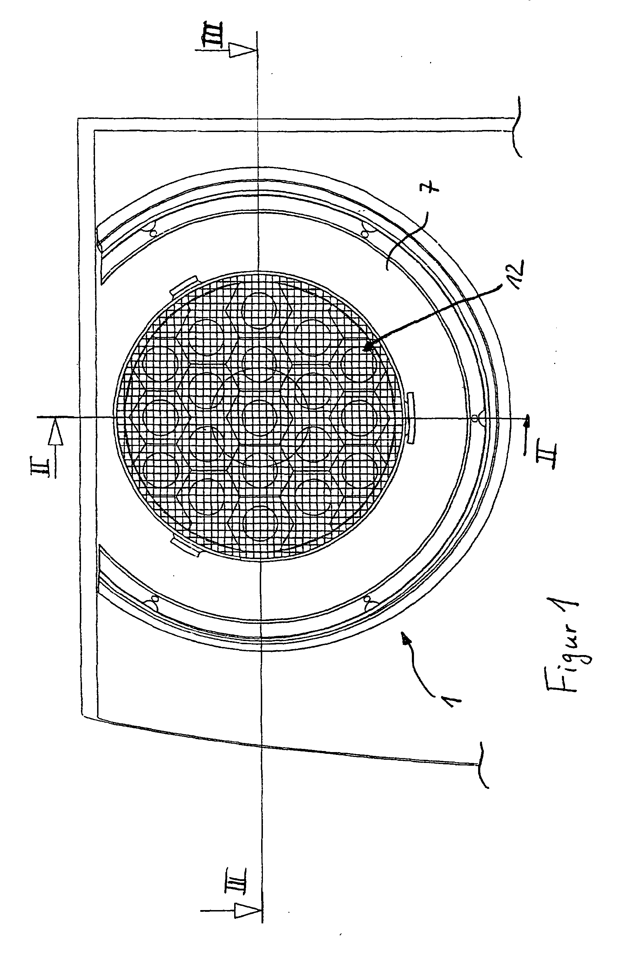

Die zweite Lichtquelleneinrichtung 4 weist eine Mehrzahl von auf einem Trägerelement 9 gleichmäßig verteilt angeordneten Leuchtelementen 10 auf. Die Leuchtelemente 10 sind als Leuchtdioden ausgebildet, die auf einer als Trägerplatte oder Trägerplatine ausgebildeten Trägerelement 9 gehaltert sind. Die Trägerplatte 9 ist über nicht dargestellte Axialfüße an dem Gehäuse 2 gehaltert. Wie aus Figur 1 ersichtlich ist, ist die Trägerplatte 9 kreisförmig und rotationssymmetrisch zu der optischen Achse der Lichtquelle 8 der ersten Lichtquelleneinrichtung 3 ausgerichtet. Die Leuchtelemente 10 sind in Durchlässe 11 eines Vielreflektorenteils 12 eingefasst, das eine Mehrzahl von jeweils einem Leuchtelement 10 zugeordneten Miniaturreflektoren 13 aufweist. Die Miniaturreflektoren 13 sind im Querschnitt sechseckförmig oder triederförmig ausgebildet und bilden eine homogene Lichtverteilung der zweiten Lichtquelleneinrichtung 4 in Abstrahlrichtung. Die Leuchtelemente 10 können auch als Kleinglühlampen oder als Neonlampen ausgebildet sein.

Zwischen der Lichtquelle 8 und der Trägerplatte 9 ist ein Wärmeschutzelement 14 angeordnet, das die Lichtquelle 8 kappenförmig abdeckt. Damit die Leuchtdioden 10 vor der durch die Lichtquelle 8 erzeugten Wärme geschützt ist, besteht das Wärmeschutzelement 14 aus einem wärmeabsorbierenden bzw. wärmeableitenden Material, das für das Licht transparent ist. Zusätzlich kann die Vorderfläche zur Licht- und Wärmereflexion lackiert sein.

Das Vielreflektorenteil 12 ist einstückig und über entgegen der Abstrahlrichtung verlaufende Haltearme 15 an dem Gehäuse 2 bzw. dem Reflektor 5 gehaltert.

Nach dem vorliegenden Ausführungsbeispiel ist die Lichtscheibe 6 vollständig gelb gefärbt, so dass das von der Lichtquelle 8 emittierte und an dem Reflektor 5 reflektierte weiße Licht nach dem Durchtritt durch die Lichtscheibe 6 als gelbes Licht wahrgenommen wird. Die erste Lichtquelleneinrichtung 3 kann daher eine Blinklichtfunktion bilden, die ein kreisringförmiges Aussehen hat. Dabei werden hauptsächlich äußere Abschnitte der Lichtscheibe 6 von den Lichtstrahlen der ersten Lichtquelleneinrichtung 3 erfasst. Überscheinendes Licht in den Bereich der zweiten Lichtquelleneinrichtung 4 ist zulässig.

Ein mittlerer Abschnitt der Lichtscheibe 6 wird als rote Farbe wahrgenommen, da die hauptsächliche Strahlungsleistung der Leuchtdioden 10 in einem Wellenlängenbereich liegt, der der Farbe Rot des Lichtes entspricht. Das Licht der roten Leuchtdioden 10 (LED) wird durch die Miniaturreflektoren 13 in Abstrahlrichtung konvergiert, so dass eine homogene Lichtverteilung erzeugt wird. Der Durchtritt des Lichtes durch die gelb eingefärbte Lichtscheibe 6 beeinflusst den Farbeindruck nur unwesentlich, so dass die zweite Lichtquelleneinrichtung 4 zur Bildung von Bremslicht- oder Schlusslichtfunktion geeignet ist.

Nach einer alternativen Ausführungsform der Erfindung kann die Lichtscheibe 6 auch glasklar ausgebildet sein, wobei die erste Lichtquelleneinrichtung 3 zur Bildung einer Rückfahrlichtfunktion dient. Alternativ kann bei Wahl einer glasklaren Lichtscheibe 6 durch Einsatz von orangefarbenen Leuchtdioden eine Blinklichtfunktion erzeugt werden.

Bei Wahl einer roten Lichtscheibe 6 kann die erste Lichtquelleneinrichtung 3 zur Bildung einer Bremslichtfunktion und die zweite Lichtquelleneinrichtung 4 zur Bildung einer Blinklichtfunktion dienen.

Alternativ kann die Lichtscheibe 6 auch eine solche Farbgebung aufweisen, dass das von der zweiten Lichtquelleneinrichtung 4 emittierte Licht farblich geprägt wird. Darüber hinaus kann es auch vorgesehen sein, dass die äussere erste Lichtquelleneinrichtung 3 eine Mehrzahl von Leuchtdioden aufweist, während die innere zweite Lichtquelleneinrichtung 4 als eine oder mehrere Glühlampen ausgebildet ist.

Nach einer alternativen Ausführungsform der Erfindung kann das Wärmeschutzelement 14 auch eingefärbt sein. Damit lässt sich mit der ersten Lichtquelleneinrichtung 3 auch eine Signalfarbe wie beispielsweise rot oder gelb erzeugen. Das Wärmeschutzelement 14 kann als Filter wirken, das in Kombination mit einer eingefärbten Lichtscheibe die vorgegebene Signalfarbe erzeugt. Beispielsweise kann das Filter grüngelb oder türkis gefärbt sein und die Lichtscheibe rosa gefärbt sein.

## Patentansprüche

1. Leuchte für Fahrzeuge mit einer ersten Lichtquelleneinrichtung (3), einem der ersten Lichtquelleneinrichtung (3) zugeordneten Reflektor (5) und einer der ersten Lichtquelleneinrichtung (3) vorgelagerten zweiten Lichtquelleneinrichtung (4), wobei die zweite Lichtquelleneinrichtung (4) eine Mehrzahl von eine zu der ersten Lichtquelleneinrichtung (3) unterschiedliche Farbgebung erzeugenden Leuchtelementen (10) aufweist, die auf einem Trägerelement (9) angeordnet sind, und dass die erste Lichtquelleneinrichtung (3) und die zweite Lichtquelleneinrichtung (4) durch eine glasklare Abdeckscheibe (7) abgedeckt sind, **dadurch gekennzeichnet, dass** die erste lichtquelleneinrichtung (3) und die zweite Lichtquelleneinrichtung (4) durch eine gemeinsame, eine einzige vorgegebene Farbgebung aufweisende Lichtscheibe (6) abgedeckt sind, der die glasklare Abdeckscheibe (7) vorgelagert ist, dass zwischen der ersten Lichtquelleneinrichtung (3) und der zweiten Lichtquelleneinrichtung (4) ein Wärmeschutzelement (14) angeordnet ist, dass die Leuchtelemente (10) der zweiten Lichtquelleneinrichtung (4) auf dem gemeinsamen Trägerelement (9) gleichmäßig verteilt angeordnet sind und dass den Leuchtelementen (10) jeweils ein Miniaturreflektor 13) zur Bildung einer Lichtverteilungsoptik zugeordnet ist.

2. Leuchte nach Anspruch 1, **dadurch gekennzeichnet, dass** die Lichtscheibe eine solche Farbgebung aufweist, die ausschließlich die durch die erste Lichtquelleneinrichtung (3) oder durch die zweite Lichtquelleneinrichtung (4) emittierten Lichtstrahlen farblich prägt.

3. Leuchte nach Anspruch 1 oder 2, **dadurch gekennzeichnet, dass** die Miniaturreflektoren (13) im Querschnitt sechseckförmig oder triederförmig ausgebildet sind.

4. Leuchte nach einem der Ansprüche 1 bis 3, **dadurch gekennzeichnet, dass** die Miniaturreflektoren (13) zu einem Vielreflektorenteil (12) mit Durchlässen (11) für die Leuchtelemente (10) zusammengefasst sind, wobei sich das Vielreflektorenteil (12) zwischen dem Trägerelement (9) und der Lichtscheibe (6) erstreckt.

5. Leuchte nach einem der Ansprüche 1 bis 4, **dadurch gekennzeichnet, dass** die Leuchtelemente (10) der zweiten Lichtquelleneinrichtung (4) als Leuchtdioden ausgebildet sind.

6. Leuchte nach einem der Ansprüche 1 bis 5, **dadurch gekennzeichnet, dass** die Leuchtdioden (10) ein Lichtbündel roter oder weißer Farbgebung emittieren und dass die Lichtscheibe (6) eine glasklare, gelbe oder rote Farbgebung aufweist.

7. Leuchte nach einem der Ansprüche 1 bis 6, **dadurch gekennzeichnet, dass** die erste Lichtquelleneinrichtung (3) eine Glühlampe oder eine Gasentladungslampe aufweist.

## Claims

1. Vehicle lamp having a first light source mans (3), a reflector (5) assigned to said first light source means (3) and a second light source means (4) preceding said first light source means (4) wherein the second light source means (4) comprises a plurality of light elements (10) which are adapted to produce different colors and arranged on a support element (9) and wherein said first light source means (3) and said second light source means (4) are provided with a transparent cover lens (7), **characterized in that** the first light source means (3) and the second light source means (4) are covered up with one common light disk (6) which is adapted to produce just one predetermined color and which is preceded by said transparent cover lens (7), that a heat protective element (14) is disposed between the first light source means (3) and the second light source means (4), that the light elements (10) of the second light source means (4) are uniformly distributed over said common support element (9) and that a miniature reflector (13) is assigned to each of the light elements (10) to form a light distributing optical system.

2. Vehicle lamp according to Claim 1, **characterized in that** the light disk is of such color that no light rays other than those emitted through the first light source means (3) or the second light source means (4) are getting colored.

3. Vehicle lamp according to Claim 1 or 2, **characterized in that** the miniature reflectors (13) are of hexagonal or trihedral cross-section.

4. Vehicle lamp according to any of the preceding Claims 1 to 3, **characterized in that** the miniature reflectors (13) are combined into a multi-reflector unit (12) with passages (11) for the light elements (10) which multi-reflector unit (12) extends between the support element (9) and the light disk (6).

5. Vehicle lamp according to any of the preceding Claims 1 - 4, **characterized in that** the light elements (10) of the second light source means (4) are in the form of light emission diodes.

6. Vehicle lamp according to any of the preceding Claims 1 - 5, **characterized in that** said light emission diodes (10) are adapted to emit a light beam of red or white color and that the light disk (6) is transparent and/or of yellow or red color.

7. Vehicle lamp according to any of the preceding Claims 1 - 6, **characterized in that** the first light source means (3) is an incandescent bulb or gas discharge lamp.

## Revendications

1. Feu pour véhicules automobiles, qui comprend un premier système de source lumineuse (3), un réflecteur ((5), associé au premier système de source lumineuse (3), et un deuxième système de source lumineuse (4), qui est monté en amont du premier système de source lumineuse (3), sachant que le deuxième système de source lumineuse (4) est doté d'une pluralité d'éléments luminescents (10), qui, générant une coloration différente, par rapport au premier système de source lumineuse (3), sont disposés sur un élément de support (9), et que le premier système de source lumineuse (3) et le deuxième système de source lumineuse (4) sont recouverts par une glace de recouvrement (7), **caractérisé en ce que** le premier système de source lumineuse (3) et le deuxième système de source lumineuse (4) sont recouverts par une glace de lampe (6) commune, présentant une seule couleur prédéterminée, en amont de laquelle est montée la glace de recouvrement (7) présentant la transparence du verre, qu'un élément de protection thermique (14) est agencé entre le premier système de source lumineuse (3) et le deuxième système de source lumineuse (4), que les éléments luminescents (10) du deuxième système de source lumineuse (4) sont répartis régulièrement sur l'élément de support (9) commun, et qu'à chacun des éléments luminescents (10) est associé un réflecteur miniature (13), qui est destiné à former un système optique de répartition de lumière.

2. Feu selon la revendication 1, **caractérisé en ce que** la glace à lampe présente une coloration, qui colore exclusivement les rayons lumineux, qui sont émis par le premier système de source lumineuse (3) ou par le deuxième système de source lumineuse (4).

3. Feu selon revendication 1 ou 2, **caractérisé en ce que** les réflecteurs miniature (13) présentent une section transversale hexagone ou en forme de trièdre.

4. Feu selon l'une des revendications 1 à 3, **caractérisé en ce que** les réflecteurs miniature (13) sont groupés en une pièce à réflecteurs multiples (12), avec des passages (11) pour les éléments luminescents (10), la pièce à réflecteurs multiples (12) s'étendant entre l'élément de support (9) et la glace à lampe (6)

5. Feu selon l'une des revendications 1 à 4, **caractérisé en ce que** les éléments luminescents (10) du deuxième système de source lumineuse (4) sont formés par des diodes électroluminescentes.

6. Feu selon l'une des revendications 1 à 5, **caractérisé en ce que** les diodes électroluminescentes (10) émettent un faisceau lumineux de couleur rouge ou blanche, et que la glace à lampe (6) présente une couleur jaune ou rouge, transparente.

7. Feu selon l'une des revendications 1 à 6, **caractérisé en ce que** le premier système de source lumineuse (3) est doté d'une lampe à incandescence ou d'une lampe à décharge gazeuse.
